# EUROPÄISCHE PATENTANMELDUNG

(11) **EP 1 195 222 A2**
(43) Veröffentlichungstag der Anmeldung: **10.04.2002**
(21) Anmeldenummer: 01890275.9
(22) Anmeldetag: 25.09.2001
(51) Int. Cl.: B23Q 9/00

(54) **Vorrichtung zum Fräsen von Kreisbogen**

(30) Priorität: 06.10.2000 AT 743000
(71) Anmelder: Schwarz, Günter, 8020 Graz (AT)
(72) Erfinder: Schwarz, Günter, 8020 Graz (AT)
(74) Vertreter: Rippel, Andreas, Dipl.-Ing.

(57) **Zusammenfassung**

Eine Vorrichtung zum Fräsen von Kreisbögen mittels einer von Hand geführten Oberfräse besitzt eine Aufnahme (1), an der die Oberfräse befestigbar ist und die mit einer mit einer Maßeinteilung (4) versehenen Stange (2) verbunden ist, die in einem Führungsrahmen (5) verschieb- und feststellbar geführt ist.

Der Führungsrahmen (5) weist einen Mittelpunkthalter (9) auf oder ist mit einem solchen verbunden, der einen den Mittelpunkt des Kreisbogens definierenden Zapfen (11) oder dgl. besitzt.

## Beschreibung

Die Erfindung bezieht sich auf eine Vorrichtung zum Fräsen von Kreisbögen mittels einer von Hand geführten Oberfräse.

Das Fräsen von Kreisbögen mittels einer von Hand geführten Oberfräse ist ohne Hilfsmittel sehr schwierig. Um es Bewerkstelligen zu können, bastelt sich der die Oberfräse Bedienende Hilfsmittel zusammen, wobei das Ergebnis jedoch meist nicht zufriedenstellend ist.

Die Erfindung hat es sich daher zum Ziel gesetzt, eine Vorrichtung zum Fräsen von Kreisbögen mittels einer von Hand geführten Oberfräse zu schaffen, durch die die Fräsarbeit wesentlich vereinfacht wird. Erreicht wird dies durch eine Aufnahme, an der die Oberfräse befestigbar ist und die mit einer vorzugsweise mit einer Maßeinteilung versehenen Stange verbunden ist, die in einem Führungsrahmen verschieb- und feststellbar geführt ist, wobei der Führungsrahmen einen Mittelpunkthalter aufweist oder mit einem solchen verbunden ist, der einen den Mittelpunkt des Kreisbogens definierenden Zapfen oder dgl. besitzt.

Eine erfindungsgemäße Vorrichtung ist sowohl leicht einzustellen als auch leicht zu bedienen und kann, abhängig von der Stangenlänge, für die verschiedensten Radien angewendet werden.

Um Höhendifferenzen leicht ausgleichen zu können, ist der Führungsrahmen am Mittelpunkthalter zweckmäßig höhenverschieb- und feststellbar geführt.

Bei einer kompakten Ausführungsform der Erfindung sind zur Feststellbarkeit der Stange am Führungsrahmen und des Führungsrahmens am Mittelpunkthalter zwei ineinander koaxial verschiebbare Schrauben vorgesehen, von denen eine, mit einer Bohrung für den Durchgang der anderen versehene Schraube in ein Gewinde des Führungsrahmens einschraubbar ist, wogegen die andere Schraube auf die Stange wirkt.

Zweckmäßig besteht die Stange aus einem Leichtmetallprofil, das wenigstens eine hinterschnittene Nut aufweist, wobei in diese Nut ein mit einem Gewinde für die andere Schraube versehener Gleiter eingesetzt ist.

Damit der Abstand des Arbeitsbereiches des Fräsers vom Mittelpunkt leicht einstellbar ist, ist zur Einstellung des Abstandes des Fräsers vom Mittelpunkt am Führungsrahmen ein von "O" nach zwei Seiten bezifferter Maßstab angeordnet, dem ein mit der Maßeinteilung der Stange zusammenwirkender verschiebbarer Zeiger zugeordnet ist. Der Bedienende kann daher den halben Durchmesser des Fräsers, je nach dem ob ein Außen- oder ein Innenbogen gefräst werden soll, durch Verschieben des Zeigers berücksichtigen.

Nachstehend ist die Erfindung anhand eines in den Zeichnungen dargestellten Ausführungsbeispieles näher beschrieben, ohne auf dieses Beispiel beschränkt zu sein. Dabei zeigen:
Fig. 1 eine Seitenansicht der erfindungsgemäßen Vorrichtung mit gekürzter Stange;
Fig. 2 eine Draufsicht auf die Vorrichtung nach Fig. 1;
Fig. 3 einen Schnitt nach der Linie III-III in Fig. 2;
Fig. 4 die Ansicht der Anstoßstelle einer Stange mit einer Verlängerungsstange und
Fig 5 einen Schnitt nach der Linie V-V in Fig. 4.

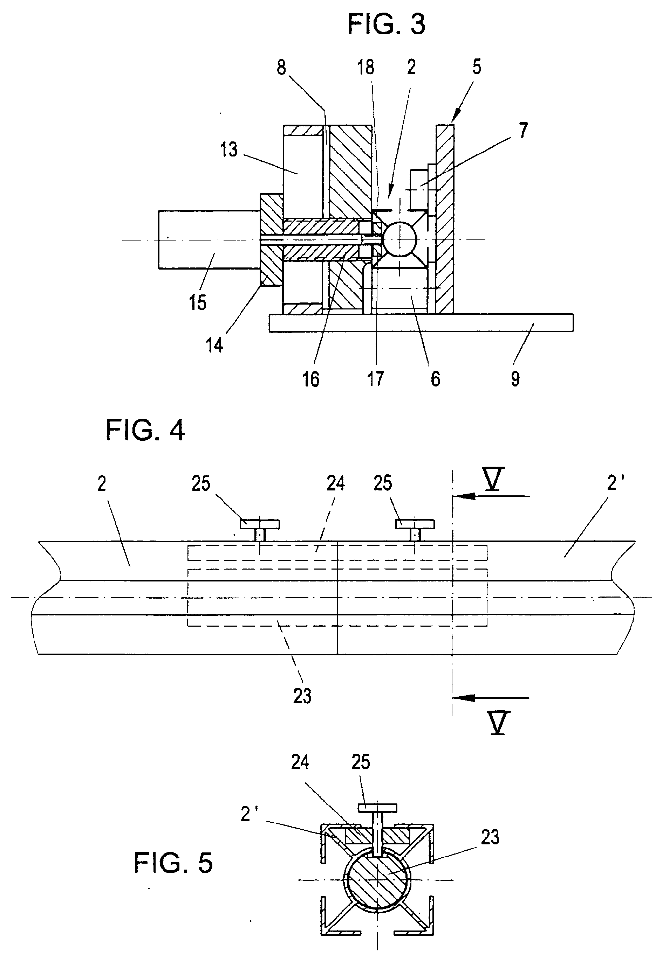

Gemäß den Zeichnungen ist mit einer Aufnahme 1 für eine (nicht gezeichnete) Oberfräse über einen Bock 3 eine Stange 2 verbunden. Die Stange 2 besteht aus einem Leichtmetallprofil, dessen Querschnitt aus den Fig. 3 und 5 ersichtlich ist. An der Oberseite der Stange 2 ist eine Maßeinteilung 4 angebracht.

Die Stange 2 ist in einem Führungsrahmen 5 verschieb- und feststellbar geführt. Hiezu weist der Führungsrahmen 5 zwei untere Rollen 6 und zwei obere Rollen 7 auf, wobei die Stange 2 auf den unteren Rollen 6 auf ihrer gesamten Länge aufliegt.

Über Gleitführungen 8 ist der Führungsrahmen 5 mit einem Mittelpunkthalter 9 verschieb- und feststellbar verbunden, der einen Bock 10 trägt. In diesem ist ein Zapfen 11 verschiebbar, der mittels einer Schraube 12 feststellbar ist. Der Zapfen 11 stellt beim Gebrauch der erfindungsgemäßen Vorrichtung den Mittelpunkt des herzustellenden Kreisbogens dar.

Der Mittelpunkthalter 9 ist mit einem Langloch 13 versehen, durch das zwei ineinander koaxial verschiebbare Schrauben 14 und 15 gesteckt sind. Die Schraube 14 besitzt eine Bohrung für das Durchstecken der Schraube 15. Das Gewinde der Schraube 14 ist in das Muttergewinde 16 des Führungsrahmens 5 einschraubbar, sodaß durch Anziehen der Schraube 15 der Führungsrahmen 5 gegen die Führungen 8 des Mittelpunkthalters 9 preßbar und somit feststellbar ist.

Das Gewinde der durch die Schraube 14 gesteckten Schraube 15 ist in einen Gleiter 17 einschraubbar, der in einer hinterschnittenen Nut 18 der Stange 2 eingesetzt ist. Durch Anziehen der Schraube 15 ist daher die Stange 2 feststellbar.

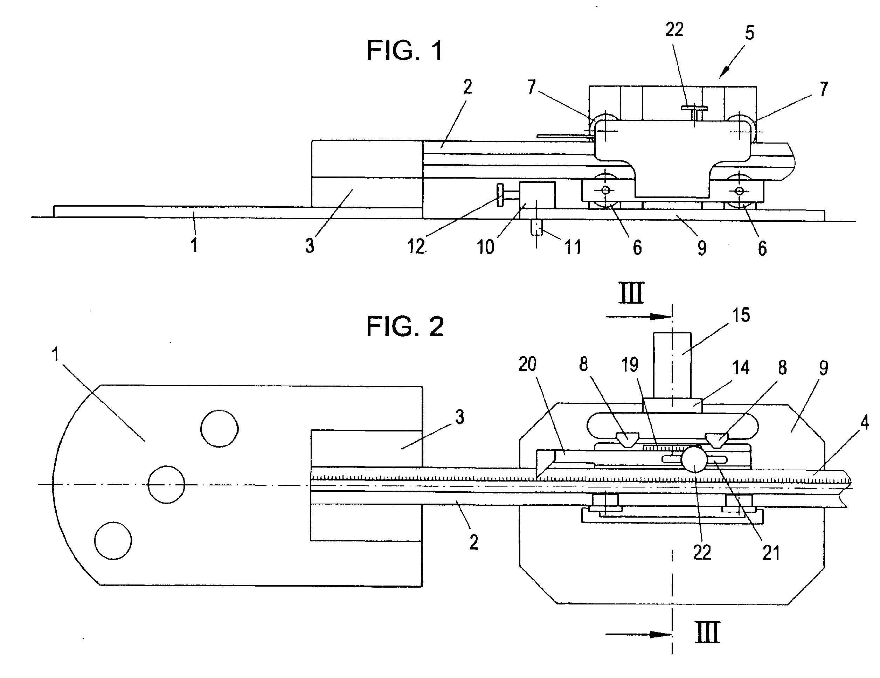

Am Führungsrahmen 5 ist ein von "O" nach zwei Seiten bezifferter Maßstab 19 angeordnet, dem ein mit der Maßeinteilung 4 der Stange 2 zusammenwirkender verschiebbarer Zeiger 20 zugeordnet ist. Der Zeiger 20 ist in einem Langloch 21 verschiebbar und mittels einer Schraube 22 feststellbar. In der in Fig. 2 gezeichneten Nullstellung des Zeigers liegt dieser über dem Mittelpunkt des den herzustellenden Kreisbogens bildenden Zapfen 11. Das auf der Maßeinteilung 4 abgelesene Maß stellt den Abstand zwischen dem Zapfen 11 und dem Mittelpunkt des Fräsers dar. Durch Verschieben des Zeigers um ein Maß, das dem Radius des Fräsers entspricht, braucht beim Ablesen am Maßstab 4 dieser Radius nicht zu- oder abgezählt werden.

Um größere Radien fräsen zu können, ist die Stange 2 durch eine gleiche Stange 2' verlängerbar, wie in den Fig. 4 und 5 dargestellt ist. In beide Stangen wird ein Zylinder 23 sowie ein Flacheisen 24 eingeschoben und durch Schrauben 25 festgeklemmt.

## Patentansprüche

1. Vorrichtung zum Fräsen von Kreisbögen mittels einer von Hand geführten Oberfräse, **gekennzeichnet durch** eine Aufnahme (1), an der die Oberfräse befestigbar ist und die mit einer vorzugsweise mit einer Maßeinteilung (4) versehenen Stange (2) verbunden ist, die in einem Führungsrahmen (5) verschieb- und feststellbar geführt ist, wobei der Führungsrahmen (5) einen Mittelpunkthalter (9) aufweist oder mit einem solchen verbunden ist, der einen den Mittelpunkt des Kreisbogens definierenden Zapfen (11) oder dgl. besitzt.

2. Vorrichtung nach Anspruch 1, **dadurch gekennzeichnet, daß** der Führungsrahmen (5) am Mittelpunkthalter (9) höhenverschieb- und feststellbar geführt ist.

3. Vorrichtung nach den Ansprüchen 1 und 2, **dadurch gekennzeichnet, daß** zur Feststellbarkeit der Stange (2) am Führungsrahmen (5) und des Führungsrahmens (5) am Mittelpunkthalter (9) zwei ineinander koaxial verschiebbare Schrauben (14, 15) vorgesehen sind, von denen eine (15), mit einer Bohrung für den Durchgang der anderen (14) versehene Schraube in ein Gewinde (16) des Führungsrahmens (5) einschraubbar ist, wogegen die andere Schraube (14) auf die Stange (2) wirkt.

4. Vorrichtung nach Anspruch 3, **dadurch gekennzeichnet, daß** die Stange (2) aus einem Leichtmetallprofil besteht, das wenigstens eine hinterschnittene Nut (18) aufweist, wobei in diese Nut (18) ein mit einem Gewinde für die andere Schraube (15) versehener Gleiter (17) eingesetzt ist.

5. Vorrichtung nach einem der Ansprüche 1 bis 4, **dadurch gekennzeichnet, daß** zur Einstellung des Abstandes des Fräsers vom Mittelpunkt am Führungsrahmen (5) ein von "O" nach zwei Seiten bezifferter Maßstab (19) angeordnet ist, dem ein mit der Maßeinteilung (4) der Stange (2) zusammenwirkender verschiebbarer Zeiger (20) zugeordnet ist.

6. Vorrichtung nach einem der Ansprüche 1 bis 5, **dadurch gekennzeichnet, daß** die Stange (2) durch eine gleich ausgebildete Stange (2) verlängerbar ist.
